# EUROPEAN PATENT SPECIFICATION

(11) **EP 3 518 523 B1**
(45) Date of publication and mention of the grant of the patent: **08.10.2025**
(21) Application number: 17852695.0
(22) Date of filing: 31.07.2017
(51) Int. Cl.: H04N 17/00, B60R 16/02, G01M 17/007, G06T 1/00, G06T 7/593, G06V 10/98, G06V 20/56, H04N 13/106, H04N 13/239

(54) **IMAGE PROCESSING DEVICE**
BILDVERARBEITUNGSVORRICHTUNG
DISPOSITIF DE TRAITEMENT D'IMAGES

(30) Priority: 23.09.2016 JP 2016185725
(43) Date of publication of application: 31.07.2019
(73) Proprietor: Astemo, Ltd., Tokyo 100-0004 (JP)
(72) Inventor: NAGOSHI, Hiroto, Hitachinaka-shi Ibaraki 312-8503 (JP)
(74) Representative: MERH-IP Matias Erny Reichl Hoffmann Patentanwälte PartG mbB
(86) International application number: PCT/JP2017/027608
(87) International publication number: WO 2018/055914

(56) References cited:
- JP-A- 2006 313 498
- JP-A- 2008 190 868
- US-A1- 2006 187 303
- US-A1- 2015 279 017
- US-A1- 2016 117 831

## Description

### Technical Field

The present invention relates to an image processing device.

### Background Art

Conventionally, in failure diagnosis of an on-vehicle camera image processing device, there is a known method of detecting an abnormality in a case where any failure occurs in a path from an imaging element to the image processing device, by outputting a test image from the imaging element to the image processing device and comparing the test image with an expected value in a failure diagnosis unit in the image processing device (see PTL 1). Furthermore, PTL 2 discloses an image processing apparatus which performs an image processing operation for image data captured by a camera.

### Citation List

### Patent Literature

PTL 1: WO 2015/104915
PTL 2: US 2016/117 831 A1

### Summary of Invention

### Technical Problem

In such a conventional configuration, a test image output from an imaging element is a fixed test image such as a stripe pattern, and for a system such as a stereo camera system that combines captured images from a pair of cameras to obtain a parallax image, there is a drawback that the fixed test image is difficult to properly activate a function of a parallax image generation unit, which fails to reliably detect a failure of the parallax image generation unit.

The present invention has been made in view of the above drawback, and it is an object of the present invention to provide an image processing device that activates a function of a parallax image generation unit that obtains a parallax image with a combination of a pair of cameras to perform a reliable failure diagnosis.

### Solution to Problem

The present invention is set out in the appended set of claims. Preferable embodiments are defined in the dependent claims.

### Advantageous Effects of Invention

According to the image processing device of the present invention, most of a parallax image generation unit can be activated, which can enhance the reliability of the image processing device in a larger range.

Further features relating to the present invention will be apparent from the description hereof and the accompanying drawings. In addition, problems, configurations, and effects except those described above will be apparent from the description of the embodiments below.

### Brief Description of Drawings

[FIG. 1] FIG. 1 is a schematic configuration diagram of an image processing device according to a first embodiment of the present invention.
[FIG. 2] FIG. 2 is a schematic configuration diagram of a diagnostic operation of the image processing device according to the first embodiment of the present invention.
[FIG. 3] FIG. 3 is a schematic configuration diagram of a diagnostic operation of an image processing device according to a second embodiment of the present invention.
[FIG. 4] FIG. 4 is a schematic configuration diagram of a diagnostic operation of an image processing device according to a third embodiment of the present invention.
[FIG. 5] FIG. 5 is a schematic configuration diagram of a diagnostic operation of an image processing device according to a fourth embodiment of the present invention.
[FIG. 6] FIG. 6 is an example of a diagnostic image of the diagnostic operation of the image processing device according to the first embodiment of the present invention.
[FIG. 7] FIG. 7 is an example of a diagnostic image of a diagnostic operation of the image processing device according to the first embodiment of the present invention.

### Description of Embodiments

Hereinafter, embodiments of the present invention will be described with reference to the drawings.

### [First embodiment]

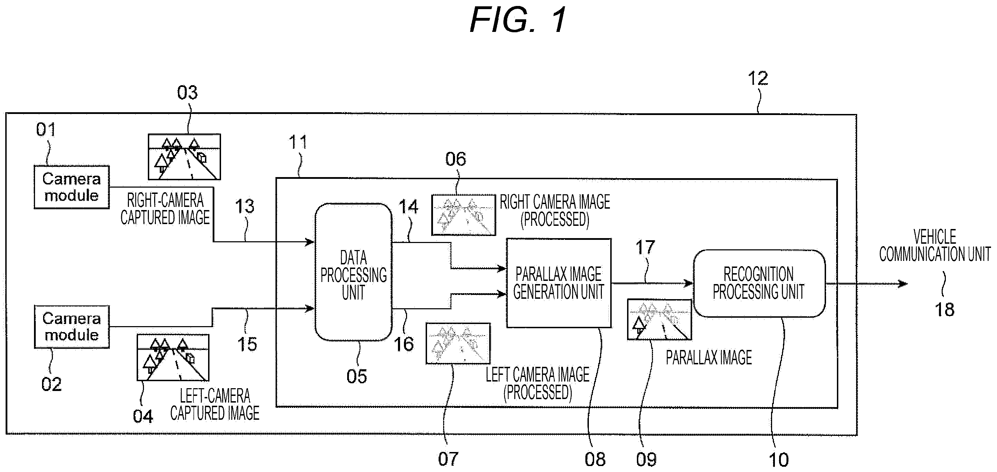

FIG. 1 is a diagram for explaining the configuration and operation of an image processing device according to the present invention. An image processing device 12 according to the present embodiment processes an image obtained by capturing an outside image from a vehicle, and has a right-camera imaging element unit 01 and a left-camera imaging element unit 02 that are attached on the vehicle and capture an outside image such as the front of the vehicle. The right-camera imaging element unit 01 and the left-camera imaging element unit 02 are a pair of imaging modules installed in the vehicle and each include an imaging element, for example, a charge couples device (CCD) image sensor and a complementary metal-oxide-semiconductor (CMOS) image sensor, and a circuit that handles electronic signals, and have, in addition to a function of converting light transmitted through a lens into an electronic signal and outputting the electric signal as a digital signal after alternating current (AD) conversion, a function of outputting a test image as a digital signal. As the test image, a fixed pattern such as a uniform luminance image, a stripe image, a color chart, or the like can be output.

The image processing device 12 monitors forward in a normal traveling state of the vehicle and outputs a right-camera captured image 03 of the right-camera imaging element unit 01 and a left-camera captured image 04 of the left-camera imaging element unit 02 to an image processing function unit 11.

The image processing function unit 11 includes a data processing unit 05, a parallax image generation unit 08, and a recognition processing unit 10. The image processing function unit 11 acquires the right-camera captured image 03 and the left-camera captured image 04 that are a pair of captured images output from the right-camera imaging element unit 01 and the left-camera imaging element unit 02 (image acquisition unit).

In the data processing unit 05, image processing is performed on each of the right-camera captured image 03 and the left-camera captured image 04 that have been acquired, for the purpose of denoising and image sharpness. Specific examples of the processing include luminance adjustment for an entire image, luminance adjustment for each pixel, gain adjustment for each luminance, or the like.

A processed right camera image 06 and a processed left camera image 07 are used as inputs to the parallax image generation unit 08, and the parallax image generation unit 08 combines the two pieces of image data 06 and 07 to generate a parallax image 09. The parallax image 09 indicates information on distance to an object in front of the vehicle by using a difference between the right camera image 06 and the left camera image 07. Based on the information on the parallax image 09, in the recognition processing unit 10, information on the front of the vehicle (recognizes the environment outside the vehicle) is determined, a collision risk and the necessity of vehicle acceleration/deceleration is determined, and a notification for the determination result is issued to the vehicle by a vehicle communication unit 18.

Because digital signal processing is performed following the image processing function unit 11, the data processing unit 05, the parallax image generation unit 08, and the recognition processing unit 10 are provided in combination with software and hardware such as a microcomputer, a memory, a field-programmable gate array (FPGA), an application specific integrated circuit (ASIC), or the like. In particular, the data processing unit 05, the parallax image generation unit 08, and the like that process a large amount of captured images at high speed often include hardware. The vehicle communication unit 18 may be a control area network (CAN) bus, a local interconnect network (LIN) bus, a FLEX-RAY, or the like.

In FIG. 1, in a case where a failure occurs in at least any one of the right-camera imaging element unit 01, transmission paths 13 and 14 for the right-camera captured image 03, the left-camera imaging element unit 02, transmission paths 15 and 16 for the left-camera captured image 04, the data processing unit 05, the parallax image generation unit 08, and a parallax image transmission path 17, there is a possibility that a normal parallax image 09 is not output. In this case, due to a shift of the parallax image 09, an erroneous determination and an erroneous distance determination for an object in front of the vehicle are transmitted to the vehicle, which may result in occurrence of sudden braking and collision unintended by the vehicle.

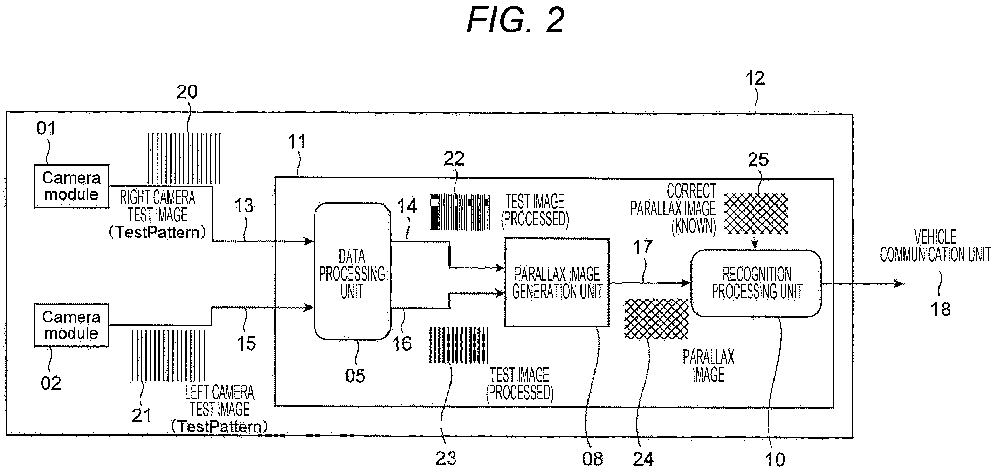

FIG. 2 is a diagram for explaining a diagnostic operation of the image processing device in the present embodiment.

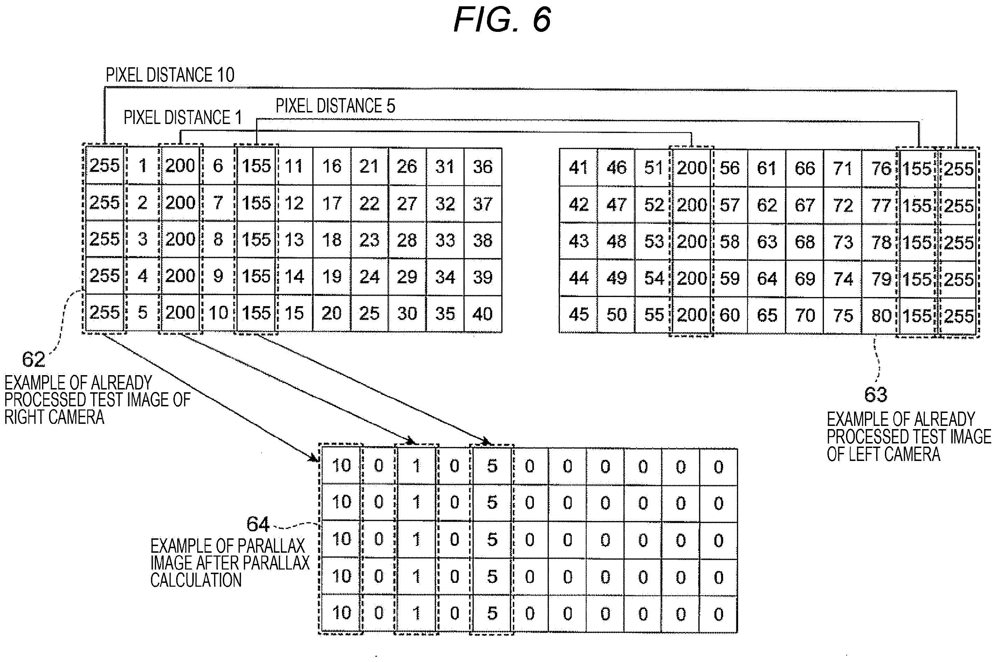

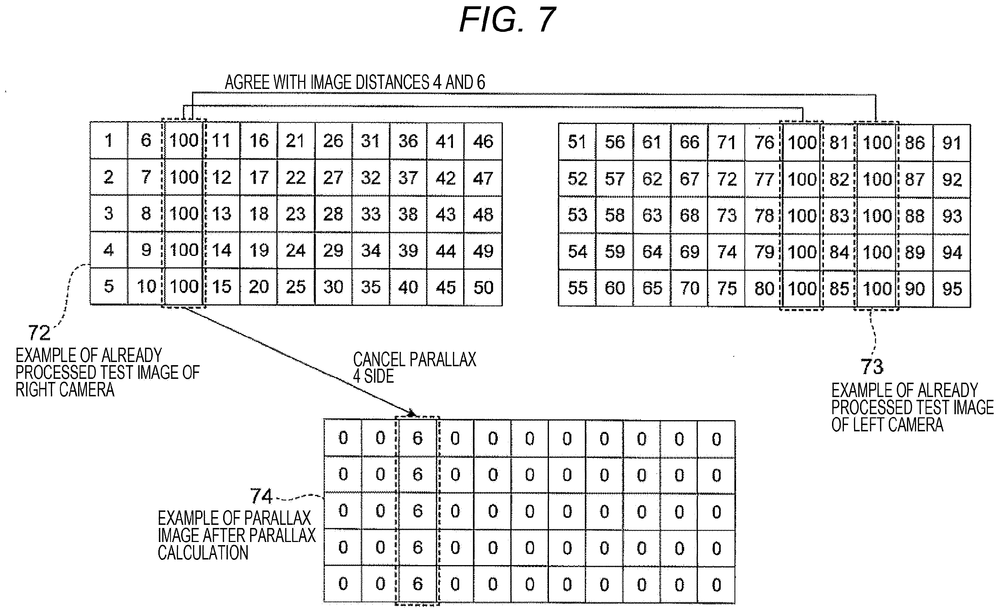

In the diagnosis of the image processing device 12 in the present embodiment, a right camera test image 20 and a left camera test image 21 are used as respective outputs from the right-camera imaging element unit 01 and from the left-camera imaging element unit 02. As a pattern of the test images, a uniform luminance image may be used so as to facilitate processing in the data processing unit 05 in the post-stage (FIG. 6), or a vertical stripe pattern may be used so as to facilitate generation of parallax information (FIG. 7).

Furthermore, the test images 20 and 21 may have patterns that are identical to or different from each other. However, in order to use the test images 20 and 21 as inputs to the parallax image generation unit 08 in the post-stage, it is desirable to provide a combination that can simplify the processing details of the data processing unit 05, with a similar pattern as much as possible. Here, the similar pattern indicates an identical pattern obtained with a combination of simple linear calculation (combination of the limited number of times of simple addition and multiplication), changing of a luminance value of a specific pixel to a feature amount such as zero by dividing a range with the pixel position or the luminance value, or parallelly shifting of a specific pattern to a specific pixel position, or the like.

In the data processing unit 05 of FIG. 2, one or both of the right camera test image 20 and the left camera test image 21 are processed to generate processed test images 22 and 23 (first test image and second test image) that are different from each other. Functions of the data processing unit 05 include luminance adjustment for an entire image, luminance adjustment for each pixel, gain adjustment for each luminance, or the like. However, it is desirable to use all possible functions to perform processing on the test images 20 and 21. Performance of data processing with as many functions as possible can improve the coverage of the diagnosis, which can increase the reliability of the overall image processing device 12.

In the parallax image generation unit 08 of FIG. 2, the already processed right camera test image 22 (first test image) and the already processed left camera test image 23 (second test image) output from the data processing unit 05 are input and a parallax image for diagnosis 24 is generated (test image generation unit).

At this time, the already processed test images 22 and 23 are subjected to processing in advance such that the functions of the parallax image generation unit 08 are used as many as possible. That is, the parallax image generation unit 08 performs processing on the test images 20 and 21 such that the functions of the parallax image generation unit 08 are used as many as possible, and generates the already processed test images 22 and 23. For example, one block having constant luminance is prepared in the already processed test image of the right camera such that a parallax of a short distance occurs, and then the other block having constant luminance that is identical to the one block, with shifted by the number of pixels for a short distance, is prepared in the already processed test image of the left camera corresponding to the one block. A combination of the already processed test images 22 and 23 may be prepared in advance such that a parallax from a short distance to a long distance occurs when a plurality of such blocks is prepared and the shifting of the pixels is adjusted to obtain the parallax image for diagnosis 24.

Each of the already processed right camera test image 22 and the already processed left camera test image 23 has a block corresponding respectively, the blocks being mutually laterally shifted by the number of pixels for a preset distance. Each of the already processed right camera test image 22 and the already processed left camera test image 23 has a pair of short-distance blocks laterally shifted by the number of pixels for a preset short distance and a pair of long-distance blocks laterally shifted by the number of pixels for a preset long distance, for example. Furthermore, each of the already processed right camera test image 22 and the already processed left camera test image 23 may have a plurality of blocks corresponding respectively, and the plurality of blocks may have the number of pixels laterally shifted that gradually changes from the number of pixels for the preset short distance to the number of pixels for the preset long distance.

An example of such a combination of the already processed images is illustrated in FIG. 6. FIG. 6 is an example of a diagnostic image of the diagnostic operation of the image processing device. In FIG. 6, reference sign 62 denotes an example of an already processed test image of the right camera, reference sign 63 denotes an example of an already processed test image of the left camera, and reference sign 64 denotes an example of a parallax image after parallax calculation (parallax image for diagnosis). In the example of FIG. 6, the long-distance parallax of a pixel distance 1, the intermediate-distance parallax of a pixel distance 5, and the short-distance parallax of a pixel distance 10 each can be diagnosed. In the example of FIG. 6, the larger the numerical value is, the closer the parallax is. In the parallax information generation unit 08, there is a case that a certain type of filter is provided in order to assist the operation of the recognition processing unit 10 in the post-stage. A combination of the test images 22 and 23 may be set so as to activate such a filter function as well.

FIG. 7 is an example of such a filter function diagnosed. FIG. 7 is an example of a diagnostic image of the diagnostic operation of the image processing device. In FIG. 7, reference sign 72 denotes an example of an already processed test image of the right camera, reference sign 73 denotes an example of an already processed test image of the left camera, and reference sign 74 denotes an example of a parallax image after parallax calculation (parallax image for diagnosis). The example of FIG. 7 uses a filter function in which a parallax with a smaller parallax numerical value (on the long-distance side) is cancelled in a case where a plurality of parallaxes is obtained when a parallax image is calculated (in a case where a plurality of locations exists where the pixels of the left camera image agree with the pixels of the right camera image). That is, this filter function cancels the parallax of a pixel distance 4 between the parallax of the pixel distance 4 and the parallax of a pixel distance 6. This filter function can be diagnosed with the example image of FIG. 7.

In the recognition processing unit 10 of FIG. 2, the parallax image for diagnosis 24 output from the parallax image generation unit 08 is compared with a correct parallax image (reference parallax image) 25 held in advance in the recognition processing unit 10. The correct parallax image 25 is only one correct pattern obtained in a case where all of the right-camera imaging element unit 01, the left-camera imaging element unit 02, the transmission paths 13 and 14 for the right-camera captured image 03, the transmission paths 15 and 16 for the left-camera captured image 04, the data processing unit 05, the parallax image generation unit 08, and the parallax image transmission path 17 operate normally. In a case where the correct parallax image 25 is compared with the parallax image for diagnosis 24 and the correct parallax image 25 is identical to the parallax image for diagnosis 24, the recognition processing unit 10 determines that the right-camera imaging element unit 01, the left-camera imaging element unit 02, the transmission paths 13 and 14 for the right-camera captured image 03, the transmission paths 15 and 16 for the left-camera captured image 04, the data processing unit 05, the parallax image generation unit 08, and the parallax image transmission path 17 are normal. On the other hand, in a case where the correct parallax image 25 is not identical to the parallax image for diagnosis 24, the recognition processing unit 10 determines that a failure occurs in any of the right-camera imaging element unit 01, the left-camera imaging element unit 02, the transmission paths 13 and 14 for the right-camera captured image 03, the transmission paths 15 and 16 for the left-camera captured image 04, the data processing unit 05, the parallax image generation unit 08, and the parallax image transmission path 17, and issues an notification for the failure diagnosis result to a vehicle communication unit 18 as necessary.

Because digital signal processing is performed following the image processing function unit 11, in a case where no failure occurs, the correct parallax image 25 should completely agree with the parallax image for diagnosis 24. However, in some cases, the correct parallax image 25 may not temporarily completely agree with the parallax image for diagnosis 24 due to the influence of noise. In this case, it is desirable to perform processing, for example, in which the function of the image processing device 12 is not determined to be normal until the correct parallax image 25 completely agrees with the parallax image for diagnosis 24 with repetition of diagnostic operation a plurality of times.

According to the failure diagnosis result, in a case where the function of the image processing device 12 is determined to have a failure, it is preferable to stop the function of the image processing device 12 and notify the occupant of the failure. Notification methods include tightening with a motorized seat belt, displaying a vehicle warning light, warning with a warning sound, or the like.

Such diagnosis of the image processing device 12 in FIG. 2 is preferably performed every time the image processing device 12 is activated, for example, when the ignition is turned on. This can enhance the reliability of operation of the right-camera imaging element unit 01, the transmission paths 13 and 14 for the right-camera captured image 03, the left-camera imaging element unit 02, the transmission paths 15 and 16 for the left-camera captured image 04, the data processing unit 05, the parallax image generation unit 08, and the parallax image transmission path 17 of the image processing device 12, which can greatly reduce the risk of sudden braking and collision unintended by the vehicle due to a shift of the parallax image 09.

According to the image processing device 12 of the present invention, at least one of the pair of test images to be used for the diagnoses is subjected to data processing in advance. As this data processing, processing is performed such that when the parallax image for diagnosis 24 is generated with the combination of the pair of test images 22 and 23, the parallax image that reliably uses the functions of the parallax image generation unit 08 is obtained. For example, in a case where a stripe image is used, it is considerable to use a method of, for example, updating the stripe width for one test image such that a parallax from a short distance to a long distance is obtained. Performance of comparing the parallax image for diagnosis 24 generated with the already processed test images with the correct parallax image 25 enables most of the parallax image generation unit 08 to be activated, which can enhance the reliability of the image processing device 12 in a larger range.

### [Second embodiment]

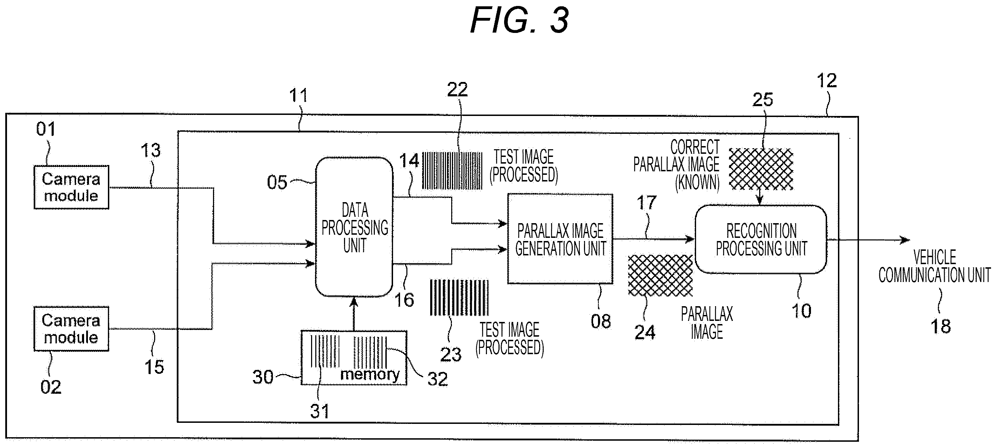

FIG. 3 illustrates a preferred second embodiment according to the present invention. In the present embodiment, unlike the first embodiment, a test image 31 stored in a memory 30 is used instead of the right camera test image 20, and a test image 32 stored in the memory 30 is used instead of the left camera test image 21, respectively. The data processing unit 05 has the memory 30 storing the test images 31 and 32, and uses the test images 31 and 32 read from the memory 30 to generate a pair of test images 22 and 23 (first test image and second test image) .

According to the present embodiment, the processing of the data processing unit 05 can lessen at the time of diagnosis. The memory load of the right-camera imaging element unit 01 and the left-camera imaging element unit 02 can be reduced, and the configuration can be simplified. In addition, the right-camera imaging element unit 01 and the left-camera imaging element unit 02 can be separated from each other, and versatility can be improved. Such a configuration may be provided in a case where only the diagnosis of the transmission path 14 for the right-camera captured image 03, the transmission path 16 for the left-camera captured image 04, the data processing unit 05, the parallax image generation unit 08, and the parallax image transmission path 17 are acceptable as a vehicle system. In order to obtain reliability similar to that of the first embodiment, it is necessary to prepare a separate diagnostic method for the corresponding parts. The other configurations and operations are the same as those in the first embodiment, and the same reference signs are given to the same configurations as in the first embodiment, and the detailed description thereof will be omitted.

### [Third embodiment]

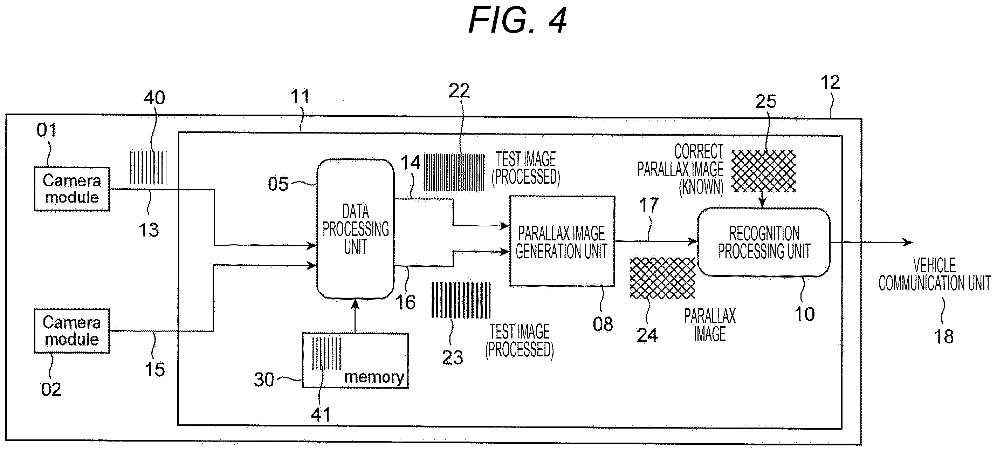

FIG. 4 illustrates a preferred third embodiment according to the present invention. In the present embodiment, unlike the first embodiment, a test image 40 corresponding to a right camera image stored in a memory for the right camera test image 40 and a test image 41 corresponding to a left camera image stored in the memory 30 of the image processing function unit 11 are used.

The right-camera imaging element unit 01 includes the memory storing the right camera test image 40, and the data processing unit 05 includes the memory 30 storing the test image 41. The data processing unit 05 uses the right camera test image 40 and the test image 41 in the memory 30 to generate a pair of test images 22 and 23 (first test image and second test image).

According to the present embodiment, the right-camera imaging element unit 01 with the memory and the left-camera imaging element unit 02 without a memory can be used. Therefore, the left-camera imaging element unit 02 can be simplified, which can reduce the cost accordingly. The other configurations and operations are the same as those in the second embodiment, and the same reference signs are given to the same configurations as in the second embodiment, and the detailed description thereof will be omitted.

### [Fourth embodiment]

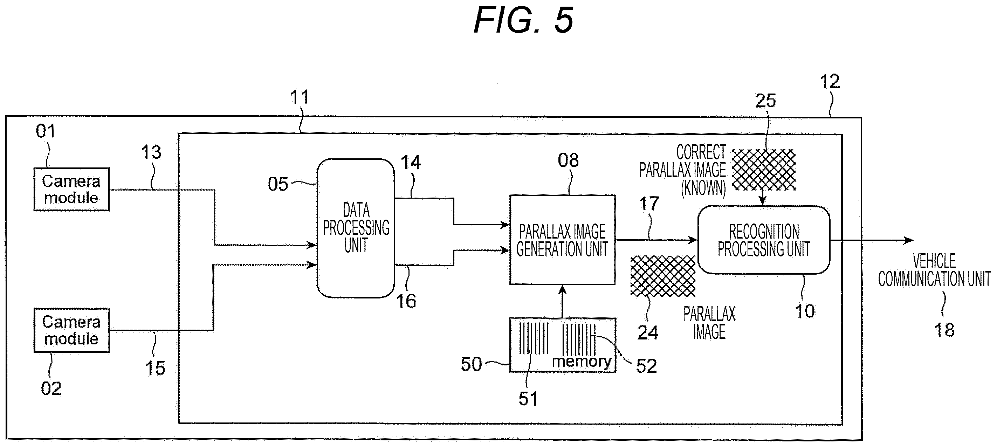

FIG. 5 illustrates a preferred fourth embodiment according to the present invention. In the present embodiment, unlike the second embodiment, a test image 51 saved in a memory 50 is used instead of the right camera already processed test image 22, and a test image 52 saved in the memory 50 is used instead of the left camera already processed test image 23, respectively. The parallax image generation unit 08 has the memory 50 storing the test images 51 and 52 (first test image and second test image), and uses the test images 51 and 52 read from the memory 50 to generate a parallax image for diagnosis 24. According to the present embodiment, the processing load of the data processing unit 05 can be alleviated, which can increase the processing speed.

In the present embodiment, only the parallax image generation unit 08 and the parallax image transmission path 17 are diagnosed at the time of diagnosis. Such a configuration may be provided in a case where these diagnoses are acceptable as a vehicle system. In order to obtain reliability similar to that of the first embodiment, it is necessary to prepare a separate diagnostic method. The other configurations and operations are the same as those in the second embodiment, and the same reference signs are given to the same configurations as in the second embodiment, and the detailed description thereof will be omitted.

Note that the present invention is not limited to the above-described first to fourth embodiments, but by the scope of the following claims.

### Reference Signs List

01 right-camera imaging element unit
02 left-camera imaging element unit
03 right-camera captured image
04 left-camera captured image
05 data processing unit
06 processed right camera image
07 processed left camera image
08 parallax image generation unit
09 parallax image
10 recognition processing unit
11 image processing function unit
12 image processing device
13 transmission path for right-camera captured image
14 transmission path for processed right camera image
15 transmission path for left-camera captured image
16 transmission path for processed left camera image
17 parallax image transmission path
18 vehicle communication unit
20 right camera test image
21 left camera test image
22 already processed right camera test image
23 already processed left camera test image
24 parallax image for diagnosis
25 correct parallax image (reference parallax image)
30 memory
31 right camera test image held in memory
32 left camera test image held in memory
40 right camera test image
41 left camera test image held in memory
50 memory
51 right camera test image held in memory for input to parallax information generation unit
52 left camera test image held in memory for input to parallax information generation unit
62 example of already processed right camera test image
63 example of already processed left camera test image
64 example of parallax image after parallax calculation
72 example of already processed right camera test image
73 example of already processed left camera test image
74 example of parallax image after parallax calculation

## Claims

1. An image processing device (12) mounted on a vehicle, comprising:
a pair of imaging modules (1, 2) configured to acquire a pair of images comprised of a first image (3) and a second image (4) and to output the pair of images to an image processing function unit (11), wherein
the image processing function unit (11) includes:
a parallax image generation unit (8) configured to generate a parallax image (9) based on a difference between the pair of images (3, 4); and
a recognition processing unit (10) configured to recognize an environment outside of the vehicle based on the parallax image (9),
wherein:
the parallax image generation unit (8) has a memory (50) for storing a first test image (51) and a second test image (52), and is further configured to generate a parallax diagnosis image (24) with the first test image (51) and the second test image (52) from the memory (50), wherein
a pattern of the test images includes a uniform luminance image, a stripe image or a color chart; and wherein
the recognition processing unit (10) is further configured to compare the parallax diagnosis image (24) with a preset reference parallax image (25), which is stored in advance in the recognition processing unit (10), to perform a diagnosis of the parallax image generation unit (8) and a parallax image transmission path (17) such that in a case wherein the parallax diagnosis image (24) and the preset reference parallax image (25) is identical, the recognition processing unit (10) determines that the parallax image generation unit (8) and the parallax image transmission path (17) functions normally, and in a case wherein the parallax diagnosis image (24) and the preset reference parallax image (25) is not identical, the recognition processing unit (10) determines that a failure has occurred in any of the parallax image generation unit (8) and the parallax image transmission path (17) and issues a corresponding notification to a vehicle communication unit (18).

2. The image processing device (12) according to claim 1, wherein
a test image generation unit is configured to generate the first processed test image (22) and the second processed test image (23) from a plurality of prestored test images, which are provided in a memory (30), which is different from the memory (50) of the parallax image generation unit (8).

3. The image processing device (12) according to claim 2, wherein
a right-camera imaging unit (1) of the pair of imaging modules includes another memory configured to store the first test image (20), wherein the other memory is different from the memory (50) of the parallax image generation unit (8) and the memory (30), and wherein
the test image generation unit is configured to process the first test image (20) and the second test image (21), which is provided in the memory (30) to generate the first processed test image (22) and the second processed test image (23).

## Patentansprüche

1. Bildverarbeitungsvorrichtung (12), die an einem Fahrzeug montiert ist und Folgendes umfasst:
ein Paar Bildgebungsmodule (1, 2), die konfiguriert sind, ein Paar Bilder, das aus einem ersten Bild (3) und einem zweiten Bild (4) besteht, zu erfassen und das Paar Bilder zu einer Bildverarbeitungsfunktionseinheit (11) auszugeben, wobei
die Bildverarbeitungsfunktionseinheit (11) Folgendes enthält:
eine Parallaxenbilderzeugungseinheit (8), die konfiguriert ist, ein Parallaxenbild (9) auf der Grundlage einer Differenz zwischen den Bildern (3, 4) des Paars zu erzeugen; und
eine Erkennungsverarbeitungseinheit (10), die konfiguriert ist, eine Umgebung außerhalb des Fahrzeugs auf der Grundlage des Parallaxenbilds (9) zu erkennen, wobei
die Parallaxenbilderzeugungseinheit (8) einen Speicher (50) zum Speichern eines ersten Prüfbilds (51) und eines zweiten Prüfbilds (52) aufweist und ferner konfiguriert ist, ein Parallaxendiagnosebild (24) mit dem ersten Prüfbild (51) und dem zweiten Prüfbild (52) aus dem Speicher (50) zu erzeugen,
ein Muster der Prüfbilder ein Bild gleichförmiger Leuchtdichte, ein Streifenbild oder eine Farbgrafik enthält und
die Erkennungsverarbeitungseinheit (10) ferner konfiguriert ist, das Parallaxendiagnosebild (24) mit einem voreingestellten Bezugsparallaxenbild (25), das im Voraus in der Erkennungsverarbeitungseinheit (10) gespeichert wurde, zu vergleichen, um eine Diagnose der Parallaxenbilderzeugungseinheit (8) und eines Parallaxenbildübertragungspfads (17) durchzuführen, derart, dass in einem Fall, in dem das Parallaxendiagnosebild (24) und das voreingestellte Bezugsparallaxenbild (25) identisch sind, die Erkennungsverarbeitungseinheit (10) bestimmt, dass die Parallaxenbilderzeugungseinheit (8) und der Parallaxenbildübertragungspfad (17) normal arbeiten, und in einem Fall, in dem das Parallaxendiagnosebild (24) und das voreingestellte Bezugsparallaxenbild (25) nicht identisch sind, die Erkennungsverarbeitungseinheit (10) bestimmt, dass ein Fehler in der Parallaxenbilderzeugungseinheit (8) und/oder in dem Parallaxenbildübertragungspfad (17) aufgetreten ist, und eine entsprechende Mitteilung zu einer Fahrzeugkommunikationseinheit (18) ausgibt.

2. Bildverarbeitungsvorrichtung (12) nach Anspruch 1, wobei
eine Prüfbilderzeugungseinheit konfiguriert ist, das erste verarbeitete Prüfbild (22) und das zweite verarbeitete Prüfbild (23) aus mehreren vorab gespeicherten Prüfbildern, die in einem Speicher (30) bereitgestellt sind, der vom Speicher (50) der Parallaxenbilderzeugungseinheit (8) verschieden ist, zu erzeugen.

3. Bildverarbeitungsvorrichtung (12) nach Anspruch 2, wobei
eine Bildgebungseinheit (1) einer rechten Kamera des Paars Bildgebungsmodule einen weiteren Speicher enthält, der konfiguriert ist, das erste Prüfbild (20) zu speichern, wobei der weitere Speicher von dem Speicher (50) der Parallaxenbilderzeugungseinheit (8) und dem Speicher (30) verschieden ist, und
die Prüfbilderzeugungseinheit konfiguriert ist, das erste Prüfbild (20) und das zweite Prüfbild (21), die im Speicher (30) bereitgestellt sind, zu verarbeiten, um das erste verarbeitete Prüfbild (22) und das zweite verarbeitete Prüfbild (23) zu erzeugen.

## Revendications

1. Dispositif de traitement d'images (12) monté sur un véhicule, comprenant :
une paire de modules d'imagerie (1, 2) configurés pour acquérir une paire d'images constituée d'une première image (3) et d'une seconde image (4), et pour sortir la paire d'images vers une unité fonctionnelle de traitement d'images (11), dans lequel
l'unité fonctionnelle de traitement d'images (11) inclut :
une unité de génération d'image de parallaxe (8) configurée pour générer une image de parallaxe (9) sur la base d'une différence entre la paire d'images (3, 4) ; et
une unité de traitement de reconnaissance (10) configurée pour reconnaître un environnement à l'extérieur du véhicule sur la base de l'image de parallaxe (9),
dans lequel :
l'unité de génération d'image de parallaxe (8) a une mémoire (50) destinée à stocker une première image de test (51) et une seconde image de test (52), et est en outre configurée pour générer une image de diagnostic de parallaxe (24) avec la première image de test (51) et la seconde image de test (52) à partir de la mémoire (50), dans lequel
un motif des images de test inclut une image à luminance uniforme, une image à rayures ou un nuancier ; et dans lequel
l'unité de traitement de reconnaissance (10) est en outre configurée pour comparer l'image de diagnostic de parallaxe (24) à une image de parallaxe de référence prédéfinie (25), qui est stockée à l'avance dans l'unité de traitement de reconnaissance (10), pour effectuer un diagnostic de l'unité de génération d'image de parallaxe (8) et d'un chemin de transmission d'image de parallaxe (17) de telle sorte que, dans un cas où l'image de diagnostic de parallaxe (24) et l'image de parallaxe de référence prédéfinie (25) sont identiques, l'unité de traitement de reconnaissance (10) détermine que l'unité de génération d'image de parallaxe (8) et le chemin de transmission d'image de parallaxe (17) fonctionnent normalement, et dans un cas où l'image de diagnostic de parallaxe (24) et l'image de parallaxe de référence prédéfinie (25) ne sont pas identiques, l'unité de traitement de reconnaissance (10) détermine qu'un échec s'est produit dans un élément quelconque parmi l'unité de génération d'image de parallaxe (8) et le chemin de transmission d'image de parallaxe (17), et émet une notification correspondante à une unité de communication de véhicule (18).

2. Dispositif de traitement d'images (12) selon la revendication 1, dans lequel une unité de génération d'images de test est configurée pour générer la première image de test traitée (22) et la seconde image de test traité (23) à partir d'une pluralité d'images de test stockée au préalable, qui sont prévues dans une mémoire (30) qui est différente de la mémoire (50) de l'unité de génération d'image de parallaxe (8).

3. Dispositif de traitement d'images (12) selon la revendication 2, dans lequel une unité d'imagerie de caméra de droite (1) de la paire de modules d'imagerie inclut une autre mémoire configurée pour stocker la première image de test (20), l'autre mémoire étant différente de la mémoire (50) de l'unité de génération d'image de parallaxe (8) et de la mémoire (30), et dans lequel
l'unité de génération d'images de test est configurée pour traiter la première image de test (20) et la seconde image de test (21), qui est prévue dans la mémoire (30) pour générer la première image de test traitée (22) et la seconde image de test traitée (23).
